(19) Europäisches Patentamt / European Patent Office / Office européen des brevets

(11) **EP 2 169 419 B1**

(12) **FASCICULE DE BREVET EUROPEEN**

(45) Date de publication et mention de la délivrance du brevet:
**14.11.2012 Bulletin 2012/46**

(51) Int Cl.:
*G01S 5/16* *(2006.01)*  *G01S 17/87* *(2006.01)*
*F41G 3/22* *(2006.01)*

(21) Numéro de dépôt: **09171226.5**

(22) Date de dépôt: **24.09.2009**

(54) **Système de détection par balayage optique de position et/ou d'orientation d'objets**

System zur Erfassung der Position und/oder Ausrichtung von Objekten über optisches Abtasten

System for detection by optical scanning of the position and/or orientation of objects

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.09.2008 FR 0805316**

(43) Date de publication de la demande:
**31.03.2010 Bulletin 2010/13**

(73) Titulaire: **Thales**
**92200 Neuilly Sur Seine (FR)**

(72) Inventeurs:
• **Barbier, Bruno**
**33000 Bordeaux (FR)**
• **Rouzes, Siegfried**
**33185 Le Haillan (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A-2008/028877   GB-A- 2 249 683
GB-A- 2 251 750   GB-A- 2 254 510
US-A- 5 742 394

# Description

La présente invention concerne le domaine des dispositifs de détection optique de position et d'orientation d'objets dans l'espace. Elle s'applique plus particulièrement dans le domaine aéronautique où dans ce cas l'objet détecté est un casque de pilote.

La détermination du positionnement d'un point dans l'espace et la détermination de l'attitude d'un objet quelconque sont des problèmes concernant de nombreux domaines techniques.

Les différentes solutions généralement apportées doivent lever toute ambiguïté de position ou d'attitude, répondre à une dynamique plus ou moins sévère des systèmes et satisfaire une précision élevée, en particulier dans le domaine aéronautique.

Dans les systèmes de détection de position et d'attitude d'objets dans l'espace répondant à une précision de quelques millimètres en position et au degré en attitude, de nombreuses applications existent dans différents domaines.

Ces systèmes sont utilisés en aéronautique, pour la détection de posture de tête, notamment pour les casques d'avions d'arme, d'hélicoptères militaires, civils ou para-civils. Ils sont utilisés également pour la détection de casques de simulation, cette détection peut alors être combinée à un dispositif d'oculométrie, également appelé eyetracker, pour la détection de position du regard. Dans le domaine de la réalité virtuelle et des jeux, il existe également de nombreuses applications de ces systèmes.

Une solution connue est l'utilisation d'un projecteur vidéo projetant dans l'espace des mires comprenant des motifs dans une zone comprenant un objet dont on cherche la cinématique. Dans ce dernier cas l'objet comprend des capteurs qui peuvent être disposés par exemple en parallélogramme.

Le brevet WO 2008/028877 décrit un procédé de détection de l'orientation et de la position d'un objet dans l'espace. Ce brevet décrit deux variantes de réalisations.

Une première variante de réalisation décrit un projecteur d'images vidéo à source laser éclairant deux capteurs linéiques positionnés sur un casque et disposés parallèlement de façon à ce que leurs extrémités forment un parallélogramme. Le projecteur d'images vidéos projette des mires comprenant des motifs particuliers dans une zone comprenant les capteurs.

Cette première variante permet d'effectuer un premier calcul qui, à partir des points d'impact des faisceaux laser sur les capteurs linéiques, fournit la position, dans un plan image du projecteur, des projetés des extrémités des capteurs. Un second calcul permet de fournir à partir de ces projections, l'orientation et la position du parallélogramme formé par extrémités des capteurs.

La seconde variante de réalisation décrit une caméra filmant quatre diodes électroluminescentes montées en parallélogramme sur un objet. Un calcul qui à partir des images projetées de ces diodes sur le plan image du capteur de la caméra permet de fournir l'orientation et la position du parallélogramme positionné sur le casque.

Néanmoins ces solutions présentes des inconvénients. Notamment, la première variante de réalisation précitée requiert des dispositifs encombrants sur l'objet. Par ailleurs, elle peut nécessiter un objectif pour expanser angulairement l'image produite par l'imageur, de type LCOS par exemple. Un autre inconvénient est que chaque capteur requiert son dispositif séquentiel de lecture associé. Enfin, le signal optique à fournir est modulé spatialement sous forme de mires.

La seconde solution précitée nécessite au moins une caméra, à savoir :

- un photo senseur bidimensionnel de type mosaïque et son dispositif séquentiel de lecture associé ;
- un objectif pour former les images des quatre diodes sur le plan du photo senseur.

Par ailleurs, les diodes électroluminescentes positionnées sur l'objet émettent un rayonnement optique, source de consommation de puissance électrique. Ce rayonnement est, d'une part, non utilisé par la caméra et d'autre part, une partie de l'énergie lumineuse est émise en dehors de la cabine de pilotage rendant la configuration avion nuisible à la furtivité.

L'invention propose de résoudre ces problèmes notamment en simplifiant le dispositif monté sur l'objet tout en assurant une cadence pour la fourniture des données de position et d'orientation de l'objet.

En effet, l'invention permet depuis un point fixe et à partir d'un projecteur de balayer par un faisceau laser une zone comprenant l'objet, ledit objet comprenant des capteurs préférentiellement de type ponctuel, tels que des photo-détecteurs. L'objet comporte préférentiellement quatre capteurs formant un parallélogramme sur l'objet. Les instants de réception de l'impulsion par chacun des capteurs correspondent à une orientation de projection du faisceau. La détermination de quatre positions des projetés des quatre capteurs dans le plan image permet alors de déterminer la position et l'orientation de l'objet dans l'espace.

Avantageusement, le dispositif optique de détermination de position et d'orientation d'un objet comprend une partie fixe de position connue comprenant un projecteur de faisceau laser à balayage séquentiel définissant le centre (O) d'un repère (R) de l'espace. Le projecteur balaie un faisceau dans une zone comprenant au moins quatre capteurs ponctuels fixés sur ledit objet, l'orientation du balayage étant connue à chaque instant, les quatre capteurs ponctuels formant un parallélogramme.

Avantageusement, les instants, auxquels chacun des capteurs (A', B', C', D') est balayé par le faisceau, déterminent quatre directions de chacun des capteurs dans le repère (R), les quatre droites passant par l'origine (O) et ayant lesdites directions interceptant un plan image de la partie fixe en quatre points projetés (A, B, C, D), les positions dans le plan image des projetés (A, B, C, D) des quatre points déterminant un quadrilatère (ABCD) permettant de calculer la position et l'orientation de l'objet dans l'espace.

Avantageusement, la détermination de la position et de l'orientation de l'objet dans l'espace comprend :

■ Le calcul des deux intersections (E, F), dans le plan image, de deux couples de droites, chacune des droites comprenant un coté du quadrilatère (ABCD), les droites étant choisies deux à deux sur des cotés opposés du quadrilatère ;

■ La détermination des composantes de la rotation du parallélogramme en fonction d'une position de référence du parallélogramme et des positions des deux intersections (E, F) ;

■ La détermination de la translation des capteurs formant un parallélogramme en fonction de la position de référence du parallélogramme et des positions des deux intersections (E, F).

Avantageusement, le faisceau peut être ponctuel, le balayage s'effectuant durant une période déterminée de manière récurrente alternativement horizontalement et verticalement.

Avantageusement, dans un autre mode de réalisation, le balayage de la zone comprend un premier balayage horizontal d'un faisceau linéaire vertical interceptant les capteurs à quatre premiers instants et un second balayage vertical d'un faisceau linéaire horizontal interceptant les capteurs à quatre seconds instants, la direction d'un capteur dans l'espace étant déterminée par deux positions angulaires, l'une étant verticale et l'autre horizontale.

Avantageusement, dans une variante de réalisation, les capteurs ponctuels sont des surfaces photosensibles d'un capteur linéaire, de type barrette.

Avantageusement, dans une autre variante de réalisation, les capteurs ponctuels sont des surfaces photosensibles d'un capteur de type matrice.

Avantageusement, le projecteur rayonne à puissance fixe.

Avantageusement, le balayage du faisceau lumineux dans la zone est effectué en moins de 20ms.

Avantageusement, le procédé optique de détermination de position et d'orientation d'un objet comporte :

■ une première étape d'initialisation comprenant un premier balayage par le dispositif optique de la revendication 1 d'une première zone de l'espace et ;

■ une seconde étape de poursuite comprenant un second balayage, succédant le premier balayage, d'une seconde zone plus petite que la première zone.

D'autres caractéristiques et avantages de l'invention apparaîtront à l'aide de la description qui suit, faite en regard des dessins annexés qui représentent :

- • la figure 1 : un balayage d'un faisceau lumineux selon l'invention dans une zone comprenant des capteurs disposés en parallélogramme.
- • La figure 2 : une disposition des quatre capteurs formant un parallélogramme de référence ;
- • La figure 3 : le dessin dans le plan image de l'image des capteurs éclairés par un projecteur.

Un premier mode de réalisation de l'invention est réalisé à partir d'un projecteur optique d'images laser. Ce dernier comprend :

- • un générateur de faisceau laser de puissance fixe, telle qu'une diode laser et un collimateur ;
- • un dispositif de déviation angulaire du faisceau laser à deux axes perpendiculaires entre eux ;
- • il est possible d'ajouter dans une variante de réalisation un objectif d'expansion angulaire dont l'axe optique est perpendiculaire aux deux axes du déviateur et qui amplifie la déviation angulaire du faisceau. Préférentiellement, cet objectif focalise le rayonnement à une distance proche de celle où sont positionnés les capteurs, tels que des photo détecteurs.

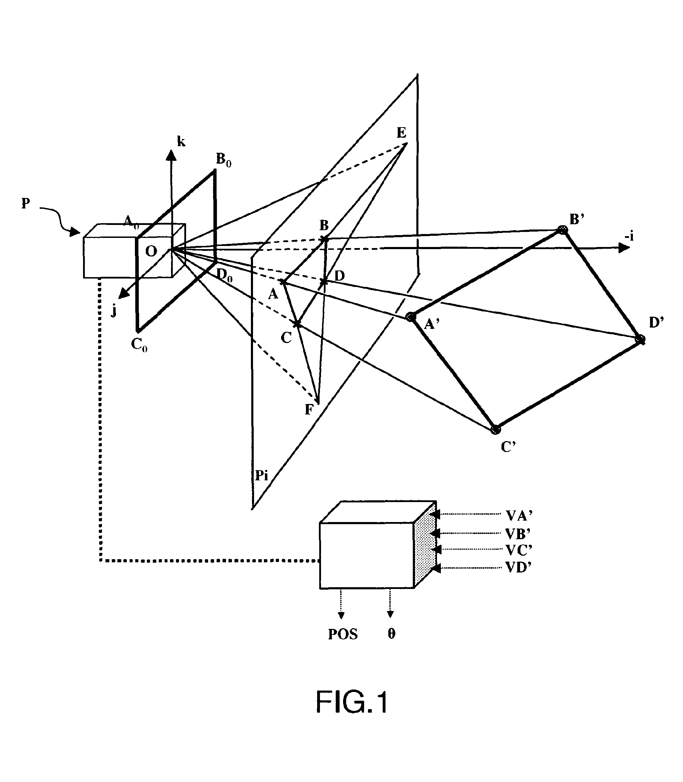

La figure 1 représente quatre photo-détecteurs A', B', C', D', tels que des photos diodes, montés, dans un mode de réalisation, en parallélogramme sur un objet, l'objet n'étant pas représenté sur la figure 1. Les quatre photo-détecteurs sont reliés électriquement à un dispositif électronique.

Un repère R(O, i, j, k) dont le centre O est le centre de projection du projecteur P permet de définir une position d'un point et une orientation d'une direction de l'espace. Ce repère est défini par un axe de projection (O, i), dit axe de projection principale, et un plan (O, j, k) perpendiculaire à l'axe de projection et parallèle à un plan image (Pi). Le plan image (Pi) est situé à une distance prédéterminée du point O.

Le dispositif électronique génère des signaux électriques dits récurrents pour la commande de chacun des deux axes du dispositif de déviation angulaire laser à fréquences temporelles fixes. Selon chaque axe, les fréquences sont, par exemple, des multiples l'une de l'autre, tels qu'un balayage de type télévision par exemple.

Le dispositif électronique analyse les quatre signaux électriques $V_{A'}$, $V_{B'}$, $V_{C'}$, $V_{D'}$ reçus des quatre photo-détecteurs et en extrait des signaux récurrents.

Dans un mode de réalisation, le projecteur de puissance optique fournit un signal avec une modulation spatiale et une modulation temporelle. La modulation temporelle peut être très simple, par exemple, la déviation angulaire peut être réalisée à vitesse constante par un balayage récurrent horizontal et vertical d'un faisceau lumineux fin à puissance fixe. Ce type de balayage est utilisé également pour la télévision.

La position angulaire de chacun des quatre capteurs dans le repère R(O, i, j, k) est repérée par la direction du faisceau qui éclaire le capteur. A instant donné, dans le repère R, la position angulaire dans l'espace d'un capteur est repérée par la direction du faisceau qui l'éclaire.

L'orientation d'un capteur dans le repère R est donnée :

■ en direction verticale, par le délai entre le début du balayage vertical et l'instant où un signal optique est détecté par le capteur et ,
■ en direction horizontale, par le délai entre le début du balayage horizontal et l'instant où un signal optique est détecté par le capteur

Dans le cas d'un projecteur laser, il n'y a pas de formation d'image, si bien que si la déviation angulaire est suffisante, l'objectif optique n'est pas obligatoirement nécessaire.

Le dispositif électronique comprend des moyens de calculs de la position POS et de l'orientation θ de l'objet dans le repère R(O, i, j, k).

Afin de calculer la rotation et la translation effectuées par l'objet et donc du parallélogramme formé des quatre points A', B', C', D' dans le repère R, on considère le plan image Pi perpendiculaire à l'axe de projection principale dans le quel on considère les projetés A, B, C, D des quatre points A', B', C', D'.

Le capteur A', lorsqu'il est intercepté par un faisceau lumineux, déclenche une impulsion électrique $V_{A'}$. L'impulsion électrique $V_{A'}$, est générée à un instant qui correspond à une position de balayage du faisceau selon OA'.

Les quatre impulsions $V_{A'}$, $V_{B'}$, $V_{C'}$, $V_{D'}$ sont transmises au dispositif électronique. Les instants de génération des impulsions électriques indiquent l'orientation du faisceau et donc la direction de chacun des capteurs, ce qui permet d'obtenir les positions dans le plan image Pi des quatre points A, B, C et D.

La construction dans le plan image des points de fuite E et F correspondants respectivement aux intersections d'une part des droites (AC) et (BD) et d'autre part des droites (AB) et (CD) permettent d'exprimer simplement les expressions analytiques de la rotation et la translation du parallélogramme A'B'C'D' par rapport à un parallélogramme de référence $A_0B_0C_0D_0$ centré au point 0 du repère R et compris dans le plan (O, j, k).

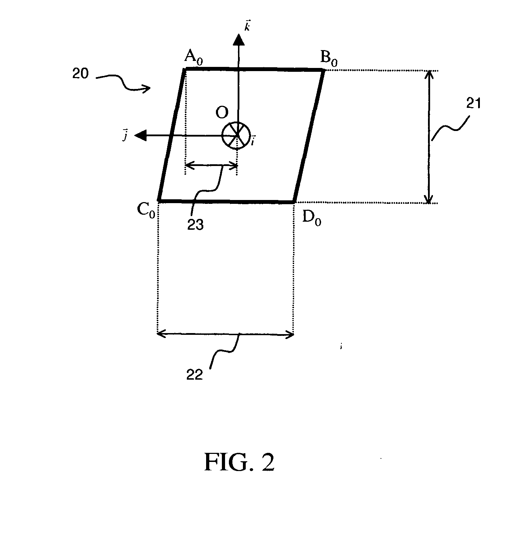

La figure 2 montre un exemple d'un parallélogramme 20 de sommets $A_0$, $B_0$, $C_0$ et $D_0$ et dont les caractéristiques sont les mêmes que celles du parallélogramme A'B'C'D' dont la position et l'orientation dans le repère R sont à déterminer. Le parallélogramme 20 possède quatre cotés notés $A_0B_0$, $C_0D_0$, $A_0C_0$ et $B_0D_0$ parallèles entre eux deux à deux. La hauteur 21 du parallélogramme est notée H, sa largeur 22 est notée L et la coordonnée 23 de $A_0$ dans le repère R *selon $\vec{j}$* est notée T.

Les quatre points sont définis dans R, par les équations suivantes :

■

$$\overrightarrow{OA_0} = T\vec{j} + \frac{H}{2}\vec{k} \ ;$$

■

$$\overrightarrow{OB_0} = (T - L)\vec{j} + \frac{H}{2}\vec{k} \ ;$$

■

$$\overrightarrow{OC_0} = -\overrightarrow{OB_0} \ ;$$

■

$$\overrightarrow{OD_0} = -\overrightarrow{OA_0} \ .$$

Ce parallélogramme de référence est placé dans le repère R de manière que son centre soit O. Le plan $(O,\vec{j},\vec{k})$, noté $P_0$, est parallèle au plan $P_i$ noté $(X_i,\vec{j},\vec{k})$, ce dernier étant le plan-image. Le plan $P_i$ contient le dessin ABCD du quadrilatère où $X_i$ est l'abscisse du plan suivant l'axe $\vec{i}$.

Il est équivalent de connaître les coordonnées des quatre sommets du parallélogramme A'B'C'D' dans R que de connaître la transformation analytique qui permet de déduire A'B'C'D' du parallélogramme 20.

Si on note $A_0$, $B_0$, $C_0$ et $D_0$ les points tels que A', B', C' et D' sont les images des points $A_0$, $B_0$, $C_0$ et $D_0$ après la rotation et la translation subies par l'objet mobile.

Etant donné que les deux parallélogrammes ont la même forme, il existe une rotation vectorielle directe r selon un axe passant par O et une $\vec{u}$, r et $\vec{u}$ étant uniques, telles que :

$$\overrightarrow{OA'} = \vec{u} + r(\overrightarrow{OA_0}) \ ;$$

$$\overrightarrow{OB'} = \vec{u} + r(\overrightarrow{OB_0}) \ ;$$

$$\overrightarrow{OC'} = \vec{u} + r(\overrightarrow{OC_0}) \ ;$$

$$\overrightarrow{OD'} = \vec{u} + r(\overrightarrow{OD_0}) \ ;$$

où O est l'origine du repère R.

Les vecteurs du dispositif électro-optique deviennent :

$$\overrightarrow{A'B'} = r(\overrightarrow{A_0 B_0}) \ ;$$

$$\overrightarrow{A'C'} = r(\overrightarrow{A_0 C_0})$$

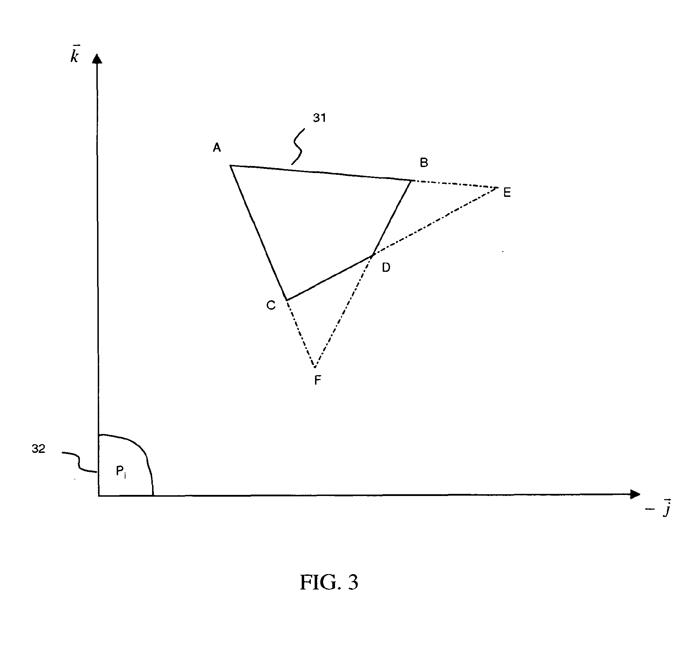

La figure 3 représente dans le plan $P_i$, le quadrilatère ABCD. Lorsqu'ils existent, ce qui correspond au cas le plus fréquent, les coordonnées des points d'intersection des droites (AB) et (CD) et des droites (AD) et (BC) (points de fuite) sont déterminées par la connaissance des coordonnées des points A, B, C, D dans R. On note alors, E le point d'intersection des droites (AB) et (CD) et F le point d'intersection des droites (AD) et (BC). On note, dans ce cas, $\vec{e}$ le vecteur $\overrightarrow{OE}$ et $\vec{f}$ le vecteur $\overrightarrow{OF}$.

Les points E et F sont appelés également les points de fuite respectivement des droites (A'B') et (A'C').

Il est connu que le vecteur $\vec{e}$ est positivement proportionnel à $\overrightarrow{A'B'}$ et que le vecteur $\vec{f}$ soit positivement proportionnel à $\overrightarrow{A'C'}$ dans R.

On a donc par construction d'une part les droites (OE) et (A'B') qui sont parallèles et d'autre part les droites (OF) et (A'C') qui sont parallèles.

Les cas, où E n'existe pas ou F n'existe pas ou que E et F n'existent pas, correspondent, respectivement, aux relations, qui découlent de la géométrie du quadrilatère ABCD, suivantes :

- les cotés AB et CD sont parallèles. ABCD est un trapèze selon AB, c'est à dire que le coté A'B' est parallèle au plan image et le coté A'C' ne l'est pas. On détermine $\vec{e} = \overrightarrow{AB}$ et $\vec{f} = \overrightarrow{OF}$.
- les cotés BC et AD sont parallèles, ABCD est un trapèze selon BC, c'est à dire que le coté A'C' est parallèle au plan image et le coté A'B' ne l'est pas ; On détermine $\vec{f} = \overrightarrow{AC}$ et $\vec{e} = \overrightarrow{OE}$.
- ABCD est un parallélogramme, c'est à dire que le parallélogramme A'B'C'D' est parallèle au plan image. On a les deux relations suivantes : $\vec{e} = \overrightarrow{AB}$ et $\vec{f} = \overrightarrow{AC}$.

Les calculs suivants sont réalisés dans le cas où E et F existent, les simplifications se faisant naturellement pour les cas particuliers où une solution déterminée existe pour chaque cas.

De $\overrightarrow{A'B'} = r\left(\overrightarrow{A_0 B_0}\right)$, on obtient, avec les

notations précédentes : $\overrightarrow{A'B'} = -L \cdot r(\vec{j})$ on déduit que

$$r(\vec{j}) = -\frac{e}{\|\vec{e}\|} \text{ , étant donné que } \|\vec{j}\| = 1 \Rightarrow \|r(\vec{j})\| = 1.$$

De même, de $\overrightarrow{A'B'} = r(A_0 C_0)$, on obtient, avec les notations précédentes : $A'C' = (L - 2T) \cdot r(\vec{j}) - Hr(\vec{k})$,

On déduit que :

$$r(\vec{k}) = \frac{q}{H} r(\vec{j}) - \frac{\sqrt{q^2 + H^2}}{H} \frac{\vec{f}}{\|\vec{f}\|} \text{ , où } q = L - 2T.$$

r étant une rotation directe, on obtient : $r(\vec{i}) = r(\vec{j}) \wedge r(\vec{k})$.

Les trois images respectives de $\vec{i}, \vec{j}, \vec{k}$ par la rotation r sont déterminées en fonction des caractéristiques connues du parallélogramme et des deux vecteurs $\vec{e}$ et $\vec{f}$.

De $\overrightarrow{OA'} = \vec{u} + r\left(\overrightarrow{OA_0}\right)$, on tire

$$\vec{u} = \overrightarrow{OA'} - T \cdot r(\vec{j}) - \frac{H}{2} \cdot r(\vec{k}).$$

Si on appelle $\mu_E$ le réel connu tel que $\overrightarrow{AE} = \mu_E \overrightarrow{AB}$ et k le réel tel que $\overrightarrow{OA'} = k \cdot \overrightarrow{OA}$, il est alors vérifié que :

$$k = \frac{A'B'}{OE} \cdot |\mu_E - 1|.$$

De la même manière on a $\mu_F$ le réel défini par la relation $\overrightarrow{AF} = \mu_F \overrightarrow{AC}$.

On obtient le résultat analytique de la translation recherchée :

$$\vec{u} = k \cdot \overrightarrow{OA} - T \cdot r(\vec{j}) - \frac{H}{2} \cdot r(\vec{k}) \text{, avec k connu.}$$

Le parallélogramme A'B'C'D' est déduit par la détermination de la transformation composée d'une rotation vectorielle connue et d'une translation connue du parallélogramme de référence $A_0 B_0 C_0 D_0$.

Dans le cas où A'B'C'D' est un losange on a relation supplémentaire : $|1 - \mu_E| \bullet OF = |1 - \mu_F| \bullet OE$.

Dans le cas où A'B'C'D' est un rectangle on a relation supplémentaire : $(\overrightarrow{OE} \cdot \overrightarrow{OF}) = 0$.

Dans le cas où A'B'C'D' est un carré, les expressions analytiques des transformations de $\vec{i}, \vec{j}, \vec{k}$ par la rotation r sont simplifiées. On obtient : L = H = 2xT et la rotation du vecteur $\vec{k}$ est déterminée de manière

simple : $r(\vec{k}) = -\frac{\vec{f}}{\|\vec{f}\|}$. Les deux relations supplémentaires, correspondantes au cas du losange et du rectangle, sont toutes les deux valables pour le cas du carré.

Le dispositif de formation d'image dans le projecteur est un déviateur à deux axes qui peut être par exemple un déviateur à miroirs galvanométriques ou encore un déviateur à effet acousto-optique.

Dans une variante de réalisation, l'objectif de projection peut être supprimé, si l'amplitude de déviation produite par les déviateurs seuls est suffisante.

Dans une variante de réalisation, le projecteur comprend un modulateur spatial de lumière, par exemple matriciel, qui est activé de manière à ce que chaque pixel de l'écran du projecteur passe successivement d'un état sombre à un état brillant.

Un autre mode de réalisation comprend un projecteur optique d'images comprenant :

■ un tube à rayons cathodiques dont la puissance de faisceau électronique est maintenue constante ;
■ un dispositif de déviation angulaire à deux axes perpendiculaires pour le faisceau électronique interne au tube cathodique ;
■ un objectif de projection qui transporte l'image réalisée sur l'écran du tube cathodique à une distance proche de celle où sont positionnées les photo-détecteurs.

Le reste du dispositif est identique à celui de la première réalisation.

Le dispositif selon l'invention présente de nombreux avantages.

Notamment, les photodiodes montées sur l'objet sont des dispositifs simples et peu encombrants qui de plus ne requièrent pas une orientation précise.

Par ailleurs, les calculs sont simples, la rotation et la translation de l'objet sont exprimées simplement par construction des deux points de fuite dans le plan image.

L'amplitude angulaire et la position centrale du rayonnement optique peuvent aisément être asservies à la zone spatiale réduite dans laquelle se situe les quatre photo-détecteurs.

Une première étape d'initialisation et de recherche en mode non asservi peut être accomplie.

La détection de la cinématique d'un objet dans l'espace peut donc comporter une première étape d'initialisation dans laquelle le faisceau lumineux balaie une large zone puis une seconde étape d'asservissement dans laquelle le balayage est effectué dans une zone plus réduite.

Ce dernier fonctionnement permet de diminuer la puissance émise ou d'augmenter sa densité spatiale projetée et évite le rayonnement en dehors de la cabine de pilotage.

Dans un autre mode de réalisation, le projecteur de puissance optique fournit un rayonnement polarisé, par exemple linéaire. Chaque photo-détecteur sur le casque est pourvue d'un polariseur linéaire qui améliore leur performance de détection en présence de rayonnement perturbateur.

Avantageusement, l'emploi d'un faisceau laser, grâce à sa faible étendue géométrique, fournit une image projetée à grande profondeur de champ. Cette caractéristique permet une plus grande tolérance aux déplacements du mobile dans la direction de l'axe de projection.

Un autre mode de réalisation peut être réalisé avec deux types de balayages consécutifs ou effectués en même temps. Un premier balayage linéaire est effectué horizontalement avec un faisceau vertical et un second balayage linéaire est effectué verticalement avec un faisceau horizontal.

Un avantage d'une telle solution est que le balayage est effectué plus rapidement sur la zone à couvrir, car le faisceau est non ponctuel. En revanche, chaque capteur est éclairé à deux instants différents, inconvénient négligeable, tant que la vitesse de la partie mobile reste inférieure à la récurrence de balayage.

Dans des variantes de réalisation de ce dernier cas, l'angle entre les directions de balayage des deux faisceaux linéaires peut être différent de 90°.

Selon ce dernier cas de réalisation, les deux faisceaux peuvent être différenciés par des longueurs d'ondes différentes ou des polarisations différentes.

Dans une variante il peut s'agir du même projecteur ou de deux projecteurs différents.

Une application privilégiée de l'invention s'applique à la détection de la position et de l'orientation d'un casque de pilote dans un cockpit d'aéronef.

## Revendications

1. Dispositif optique de détermination de position et d'orientation d'un objet comprenant une partie fixe de position connue comprenant un projecteur de faisceau laser à balayage séquentiel définissant le centre (O) d'un repère (R) de l'espace, le centre (O) étant le centre de projection dudit projecteur, ledit projecteur balayant par un faisceau une zone comprenant au moins quatre capteurs ponctuels fixés sur ledit objet, l'orientation du balayage étant connue à chaque instant, les quatre capteurs ponctuels formant un parallélogramme, **caractérisé en ce que** les instants, auxquels chacun des capteurs (A', B', C', D') est balayé par le faisceau, déterminent quatre directions de chacun des capteurs dans le repère (R), les quatre droites passant par l'origine (O) et ayant lesdites directions interceptant un plan image de la partie fixe en quatre points projetés (A, B, C, D), les positions dans le plan image des projetés (A, B, C, D) des quatre points déterminant un quadrilatère (ABCD) permettant de calculer la position et l'orientation de l'objet dans l'espace.

2. Dispositif optique de détermination de position et d'orientation d'un objet selon la revendication 1, **caractérisé en ce que** la détermination de la position et de l'orientation de l'objet dans l'espace comprend :

■ Le calcul des deux intersections (E, F), dans le plan image, de deux couples de droites, chacune des droites comprenant un coté du quadrilatère (ABCD), les droites étant choisies deux à deux sur des cotés opposés du quadrilatère ;
■ La détermination des composantes de la rotation du parallélogramme en fonction d'une position de référence du parallélogramme et des positions des deux intersections (E, F) ;
■ La détermination de la translation des capteurs formant un parallélogramme en fonction de la position de référence du parallélogramme et des positions des deux intersections (E, F).

3. Dispositif optique de détermination de position et d'orientation d'un objet selon la revendication 1, **caractérisée en ce que** le faisceau est ponctuel, le balayage s'effectuant durant une période déterminée de manière récurrente alternativement horizontalement et verticalement.

4. Dispositif optique de détermination de position et d'orientation d'un objet selon la revendication 1, **caractérisée en ce que** le balayage de la zone comprend un premier balayage horizontal d'un faisceau linéaire vertical interceptant les capteurs à quatre premiers instants et un second balayage vertical d'un faisceau linéaire horizontal interceptant les capteurs à quatre seconds instants, la direction d'un capteur dans l'espace étant déterminée par deux positions angulaires, l'une étant verticale et l'autre horizontale.

5. Dispositif optique de détermination de position et d'orientation d'un objet selon la revendication 1, **caractérisée en ce que** les capteurs ponctuels sont des surfaces photosensibles d'un capteur linéaire, de type barrette.

6. Dispositif optique de détermination de position et d'orientation d'un objet selon la revendication 1, **caractérisée en ce que** les capteurs ponctuels sont des surfaces photosensibles d'un capteur de type matrice.

7. Dispositif optique de détermination de position et d'orientation d'un objet selon la revendication 1, **caractérisée en ce que** le projecteur rayonne à puissance fixe.

8. Dispositif optique de détermination de position et d'orientation d'un objet selon la revendication 1, **caractérisée en ce que** le balayage du faisceau lumineux dans la zone est effectué en moins de 20ms.

9. Dispositif optique de détermination de position et d'orientation d'un objet selon l'une quelconque des revendications précédentes, dans lequel le projecteur comprend un dispositif de formation d'image qui est un déviateur à deux axes.

10. Dispositif optique de détermination de position et d'orientation d'un objet selon l'une quelconque des revendications précédentes, dans lequel le projecteur comprend un modulateur spatial de lumière qui est activé de manière à ce que chaque pixel de l'écran du projecteur passe successivement d'un état sombre à un état brillant.

11. Procédé optique de détermination de position et d'orientation d'un objet, **caractérisé en ce qu'**il comporte :

   ■ une première étape d'initialisation comprenant un premier balayage par le dispositif optique de la revendication 1 d'une première zone de l'espace et ;
   ■ une seconde étape de poursuite comprenant un second balayage, succédant le premier balayage, d'une seconde zone plus petite que la première zone.

**Claims**

1. An optical device for determining the position and orientation of an object comprising a fixed part of a known position, comprising a laser beam projector with sequential scanning, which defines the centre (O) of a reference (R) in space, said centre (O) being the centre of projection of said projector, said projector using a beam to scan a zone comprising at least four point sensors fixed to said object, the scanning orientation being known at each instant, the four point sensors forming a parallelogram, **characterised in that** the instants at which each of the sensors (A', B', C', D') is scanned by the beam determine four directions of each of the sensors in the reference (R), the four straight lines passing through the source (O) and the directions thereof intercept an image plane of the fixed section at four projected points (A, B, C, D), the positions in the image plane of said projections (A, B, C, D) of the four points determining a quadrilateral (ABCD) allowing the calculation of the position and orientation of the object in space.

2. The optical device for determining the position and orientation of an object according to claim 1, **characterised in that** determining the position and orientation of the object in space comprises:

   • calculating the two intersections (E, F), in the image plane, of two pairs of straight lines, each of the straight lines comprising a side of the quadrilateral (ABCD), the straight lines being selected pairwise on opposite sides of the quadrilateral;
   • determining the components of the rotation of the parallelogram according to a reference position of the parallelogram and to the positions of the two intersections (E, F);
• determining the translation of the sensors forming a parallelogram according to the reference position of the parallelogram and to the positions of the two intersections (E, F).

3. The optical device for determining the position and orientation of an object according to claim 1, **characterised in that** the beam is dot shaped, the scanning being carried out for a recurrently determined period in a horizontally and vertically alternating manner.

4. The optical device for determining the position and orientation of an object according to claim 1, **characterised in that** scanning of the zone comprises a first horizontal scanning of a vertical linear beam intercepting the sensors at four first instants and a second vertical scanning of a horizontal linear beam intercepting the sensors at four second instants, the direction of a sensor in space being determined by two angular positions, one being vertical and the other being horizontal.

5. The optical device for determining the position and orientation of an object according to claim 1, **characterised in that** the point sensors are photosensitive surfaces of a linear sensor of the strip type.

6. The optical device for determining the position and orientation of an object according to claim 1, **characterised in that** the point sensors are photosensitive surfaces of a sensor of the matrix type.

7. The optical device for determining the position and orientation of an object according to claim 1, **characterised in that** the projector radiates at a fixed power.

8. The optical device for determining the position and orientation of an object according to claim 1, **characterised in that** scanning of the light beam in the zone is completed in less than 20ms.

9. The optical device for determining the position and orientation of an object according to any one of the preceding claims, wherein the projector comprises an image forming device that is a dual axis deflector.

10. The optical device for determining the position and orientation of an object according to any one of the preceding claims, wherein the projector comprises a spatial light modulator that is activated so that each pixel in the projector screen successively passes from a dull state to a bright state.

11. An optical method for determining the position and orientation of an object, **characterised in that** it comprises:

• a first initialisation step comprising a first scanning by the optical device of claim 1 of a first zone in space and;
• a second tracking step comprising a second scanning, following the first scanning, of a second zone that is smaller than the first zone.

**Patentansprüche**

1. Optische Vorrichtung zum Ermitteln der Position und Ausrichtung eines Objekts, das einen festen Teil mit bekannter Position umfasst, umfassend einen Laserstrahlprojektor mit sequentieller Abtastung, der den Mittelpunkt (O) einer Referenz (R) des Raums definiert, wobei der Mittelpunkt (O) der Projektionsmittelpunkt des Projektors ist, wobei der Projektor mit einem Strahl eine Zone abtastet, die wenigstens vier an dem Objekt befestigte Punktsensoren umfasst, wobei die Abtastausrichtung zu jedem Zeitpunkt bekannt ist, wobei die vier Punktsensoren ein Parallelogramm bilden, **dadurch gekennzeichnet, dass** die Zeitpunkte, zu denen jeder der Sensoren (A', B', C', D') von dem Strahl abgetastet wird, vier Richtungen jedes der Sensoren in der Referenz (R) bestimmen, wobei die vier Geraden durch den Ursprung (O) verlaufen und ihre Richtungen durch eine Bildebene des festen Teils an vier projizierten Punkten (A, B, C D) gehen, wobei die Positionen in der Bildebene der Projektionen (A, B, C, D) der vier Punkte ein Viereck (ABCD) bestimmen, das die Berechnung der Position und Ausrichtung des Objekts in dem Raum zulässt.

2. Optische Vorrichtung zum Ermitteln der Position und Ausrichtung eines Objekts nach Anspruch 1, **dadurch gekennzeichnet, dass** die Ermittlung der Position und Ausrichtung des Objekts in dem Raum Folgendes beinhaltet:

• Berechnen von zwei Schnittpunkten (E, F) in der Bildebene von zwei Geradenpaaren, wobei jede der Geraden eine Seite des Vierecks (ABCD) umfasst, wobei die Geraden paarweise auf den gegenüberliegenden Seiten des Vierecks gewählt werden;
• Ermitteln der Komponenten der Rotation des Parallelogramms in Abhängigkeit von einer Referenzposition des Parallelogramms und den Positionen der beiden Schnittpunkte (E, F);
• Ermitteln der Translation der ein Parallelogramm bildenden Sensoren in Abhängigkeit von der Referenzposition des Parallelogramms und den Positionen der beiden Schnittpunkte (E, F).

**3.** Optische Vorrichtung zum Ermitteln der Position und Ausrichtung eines Objekts nach Anspruch 1, **dadurch gekennzeichnet, dass** der Strahl punktförmig ist, wobei die Abtastung für eine wiederholt bestimmte Periode abwechselnd horizontal und vertikal erfolgt.

**4.** Optische Vorrichtung zum Ermitteln der Position und Ausrichtung eines Objekts nach Anspruch 1, **dadurch gekennzeichnet, dass** das Abtasten der Zone eine erste horizontale Abtastung eines vertikalen linearen Strahls, der zu vier ersten Zeitpunkten durch die Sensoren geht, und eine zweite vertikale Abtastung eines horizontalen linearen Strahls umfasst, der zu vier zweiten Zeitpunkten durch die Sensoren geht, wobei die Richtung eines Sensors im Raum durch zwei Winkelpositionen, eine vertikale und eine horizontale, bestimmt wird.

**5.** Optische Vorrichtung zum Ermitteln der Position und Ausrichtung eines Objekts nach Anspruch 1, **dadurch gekennzeichnet, dass** die Punktsensoren fotosensible Flächen eines linearen Sensors vom Stabtyp sind.

**6.** Optische Vorrichtung zum Ermitteln der Position und Ausrichtung eines Objekts nach Anspruch 1, **dadurch gekennzeichnet, dass** die Punktsensoren fotosensible Oberflächen eines Sensors des Matrixtyps sind.

**7.** Optische Vorrichtung zum Ermitteln der Position und Ausrichtung eines Objekts nach Anspruch 1, **dadurch gekennzeichnet, dass** der Projektor mit einer festen Leistung strahlt.

**8.** Optische Vorrichtung zum Ermitteln der Position und Ausrichtung eines Objekts nach Anspruch 1, **dadurch gekennzeichnet, dass** die Abtastung des Lichtstrahls in der Zone innerhalb von weniger als 20 ms erfolgt.

**9.** Optische Vorrichtung zum Ermitteln der Position und Ausrichtung eines Objekts nach einem der vorherigen Ansprüche, bei der der Projektor eine Bildformungsvorrichtung umfasst, die ein Zwei-Achsen-Deflektor ist.

**10.** Optische Vorrichtung zum Ermitteln der Position und Ausrichtung eines Objekts nach einem der vorherigen Ansprüche, bei der der Projektor einen räumlichen Lichtmodulator umfasst, der so aktiviert wird, dass jedes Pixel des Projektorschirms nacheinander einen dunklen Zustand und einen hellen Zustand passiert.

**11.** Optisches Verfahren zum Ermitteln der Position und Ausrichtung eines Objekts, **dadurch gekennzeich-**

**net, dass** es Folgendes beinhaltet:

• einen ersten Initialisierungsschritt, der ein erstes Abtasten mit der optischen Vorrichtung nach Anspruch 1 einer ersten Zone des Raums beinhaltet; und
• einen zweiten Verfolgungsschritt, der ein zweites Abtasten, nach dem ersten Abtasten, einer zweiten Zone beinhaltet, die kleiner ist als die erste Zone.

FIG.1

FIG. 2

FIG. 3

## EP 2 169 419 B1

**Documents brevets cités dans la description**

- WO 2008028877 A